# EUROPÄISCHE PATENTSCHRIFT

(11) **EP 0 695 872 B1**
(45) Veröffentlichungstag und Bekanntmachung des Hinweises auf die Patenterteilung: **07.04.1999**
(21) Anmeldenummer: 95111381.0
(22) Anmeldetag: 20.07.1995
(51) Int. Cl.: F04D 19/04, F16C 39/06

(54) **Verfahren zum Betrieb einer Reibungspumpe mit Magnetlagerung**
Operating method for a friction vacuum pump with magnetic bearings
Méthode d'exploitation d'une pompe à vide à friction avec paliers magnétiques

(30) Priorität: 01.08.1994 DE 4427154
(43) Veröffentlichungstag der Anmeldung: 07.02.1996
(73) Patentinhaber: Pfeiffer Vacuum GmbH, 35614 Asslar (DE)
(72) Erfinder: Larsonneur, René, CH-8304 Wallisellen (CH); Bernhardt, Helmut, D-35584 Wetzlar (DE)

(56) Entgegenhaltungen:
- EP-A- 0 129 709
- DE-A- 2 409 857
- DE-A- 4 022 523
- DE-A- 4 227 663
- US-A- 5 084 643

## Beschreibung

Die Erfindung betrifft ein Verfahren zum Betrieb einer Reibungspumpe mit Magnetlagerung nach dem Oberbegriff des 1. Patentanspruches, das aus DE-A-4 022 523 bekannt ist.

Reibungspumpen erzeugen im Gebiet der Molekularströmung ein konstantes Druckverhältnis und im Gebiet der Laminarströmung eine konstante Druckdifferenz. Bei den Reibungspumpen nach der Bauart von z.B. Gaede, Holweck oder Siegbahn sind bei sehr engen Spalten sowohl das Druckverhältnis im Molelkulargebiet als auch die Druckdifferenz im Laminargebiet besonders hoch. Turbomolekularpumpen als Weiterentwicklung der Reibungspumpen der früheren Bauart erzeugen bei größeren Spalten im Molekulargebiet ein sehr hohes Druckverhältnis, im Laminargebiet jedoch nur eine geringe Druckdifferenz.

Eine Reibungspumpe nach der Bauart von Holweck wird z.B. in Comptes rendus Acad. Science 177 (1923) 43 ff. und eine solche nach der Bauart von Siegbahn in Arch. Math. Astr. Fys. 30 B (1943) dargestellt. Der grundsätzliche Aufbau und die Funktionsweise einer Turbomolekularpumpe nach Becker werden in Vakuum-Technik 9/10 (1966) beschrieben.

Der Arbeitsbereich von Turbomolekularpumpen ist nach höheren Drücken hin begrenzt, da sie nur im molekularen Strömungsgebiet voll wirksam sind. Das molekulare Strömungsgebiet wird begrenzt durch den Druck, bei dem die mittlere freie Weglänge der Moleküle auf die Größenordnung der Gefäßdimensionen absinkt.

Daher arbeiten Turbomolekularpumpen nur in Kombination mit Vorvakuumpumpen. In der Regel sind dies zweistufige Drehschieberpumpen, Wenn es aber nun gelingt, den Arbeitsbereich von Turbomolekularpumpen nach höheren Drücken hin zu verschieben, dann kann der Aufwand zur Erzeugung des Vorvakuums verringert werden. Zum Beispiel würden einstufige Drehschieberpumpen ausreichen. In anderen Fällen könnte man die ölgedichten Drehschieberpumpen - z.B. durch trockene Membranpumpen - ersetzen.

Man kann den Arbeitsbereich einer Turbomolekularpumpe nach höheren Drücken hin verschieben, indem man im Anschluß an die Vorvakuumstufe eine Reibungspumpe nach der Bauart von Holweck oder Siegbahn anbringt. Solche Kombinationen sind z.B. in der DE-AS 24 09 857 und in der EP 01 29 709 beschrieben.

Wesentlich für die Funktion solcher Reibungspumpen ist, daß der Abstand zwischen Rotor und Stator sehr gering ist. Nur dann arbeiten sie auch bei höheren Drücken als eine Turbomolekularpumpe noch im molekularen Strömungsgebiet und entwickeln ihr volles Druckverhältnis, welches den Arbeitsbereich zu höheren Drücken hin verschiebt.

Eine weitere Voraussetzung für eine effektive Arbeitsweise einer Reibungspumpe ist eine hohe Drehzahl des Rotors. Dabei kommt der Rotorlagerung eine große Bedeutung zu. Neben der klassisch mechanischen Rotorlagerung in geschmierten Kugellagern werden heute Kombinationen von Permanent-Magnetlagern und Kugellagern verwendet. Zur vollkommen berührungslosen Lagerung kommen aktiv gesteuerte Magnetlager verschiedenster Ausführungen zur Anwendung.

Diese erfordern jedoch zusätzlich zu den magnetischen Lagerelementen eine mechanische Notlauflagereinrichtung. Sollte ein Magnetlager oder Teile davon während des Betriebes ausfallen, dann haben die Notlager die Aufgabe, den Rotor aufzufangen. Dies kann während einer kurzzeitigen Störung erfolgen, nach welcher der Rotor wieder von den Magnetlagern aufgenommen wird, oder auch nach einer längeren Störung, wobei in diesem Falle der Rotor bis zum Auslaufen von den Notlagern getragen werden muß. In beiden Fällen müssen die Notlager so ausgelegt sein, daß für den Rotor ein sicherer Lauf gewährleistet ist ohne daß es zur Berührung mit den sehr eng benachbarten Statorscheiben kommt.

Daraus folgt, daß die Abstände zwischen Rotor und Notlager noch einmal deutlich kleiner sein müssen als die ohnehin sehr engen Spalte im Bereich der Pumpenelemente. Bei höheren Drehzahlen führen Unwuchten zu Bewegungen des Rotors, die das Spiel im Notlager weiterhin einschränken.

Vorteilhaft ist es, Regelverfahren anzuwenden, welche einen kräftefreien Lauf des Rotors bewirken. Dabei werden die durch die Unwucht bedingten Bewegungen des Rotors nicht ausgeregelt, um die Übertragung der entsprechenden Reaktionskräfte auf das Gehäuse zu vermeiden. Während des Betriebes kann die Unwucht jedoch aus unterschiedlichen Gründen anwachsen, wodurch sich auch die Amplitude der Rotorbewegung vergrößert. Dies darf nur in sehr begrenztem Maße geschehen, da es sonst zur Berührung mit Statorteilen kommt.

Diese extremen Erfordernisse, hohe Drehzahl, minimale Abstände zwischen stehenden und rotierenden Teilen der Pumpenelemente und der Notlauflager und die Notwendigkeit eines sicheren Betriebes auch im Störungsfalle eines Magnetlagers bedeuten für den Konstrukteur einer solchen Reibungspumpe Bedingungen, die nur schwer miteinander zu vereinbaren sind.

Durch eine hochgenaue mechanische Bearbeitung kann man einer Lösung der Probleme näher kommen. Dies bedeutet jedoch einen großen Aufwand an Arbeit und an technischer Ausrüstung. Auch die Sensortechnik bietet Lösungen an, welche jedoch ebenfalls mit hohem finanziellem und arbeitstechnischem Aufwand verbunden sind.

In der US 50 84 643 wird ein Magnetlager beschrieben, bei welchem die Istposition eines Rotors über Positionssensoren festgestellt werden kann. Der Rotor wird dann in die Sollposition zurückgeführt. Es wird in diesem Patent nicht erwähnt, wie die Sollposition ermittelt wird. Sie wird allenfalls als bekannt vorausgesetzt.

In der DE-OS 42 27 663 wird ein Verfahren zur Überprüfung der Betriebsposition einer magnetisch gelagerten Vakuumpumpe relativ zu den Fanglagern beschrieben. Mittels einer speziellen Vorrichtung können die Fanglager relativ zur (beim dort verwendeten Permanent-Magnetlager fest vorgegebenen) Betriebsposition justiert werden Auch hier steht die Frage der Ermittlung der Sollposition des Rotors nicht zur Diskussion.

Aufgabe der Erfindung ist es, eine Reibungspumpe vorzustellen, deren Rotor in aktiv geregelten Magnetlagern gelagert ist, wobei die oben aufgeführten Probleme auf einfache Weise gelöst werden, so daß für die Pumpe ein sicherer Betrieb unter den extremen Erfordernissen gewährleistet ist. Insbesondere soll erreicht werden, daß die Ermittlung der Sollposition des Rotors, welche mit dem geometrischen Zentrum des Notlagers identisch ist auf einfache Art ohne zusätzlichen Aufwand durchgeführt werden kann.

Die Aufgabe wird durch die kennzeichnenden Merkmale der Patentansprüche gelöst.

Zum Ausregeln von Erschütterungen, welche z.B. durch äußere Einwirkung auf die Pumpe entstehen können, wird die Position des Rotors durch eine Regeleinrichtung kontinuierlich überwacht und nötigenfalls durch Verändern der Ströme in dem aktiven Radiallager korrigiert. Zur Ermittlung der Rotorposition können Sensoren unterschiedlichen Prinzips oder Ersatzverfahren, welche die Rotorposition aus anderen Regelkreissignalen ermitteln, verwendet werden. Bei solchen Erschütterungen wird der Rotor unvermeidlich kurzzeitig aus seiner Sollposition ausgelenkt, um anschließend von der Regeleinrichtung wieder dorthin zurückgeführt zu werden. Das bedeutet, daß ein gewisser Abstand zwischen Rotor und Notlager vorhanden sein muß, soll es dabei nicht zur Berührung zwischen beiden kommen. Da eine Erschütterung aus jeder beliebigen Richtung kommen kann, ist dieser Abstand auch in jeder Richtung erforderlich.

Auf einen einfachen Nenner gebracht, kann man sagen, daß die Erschütterungsfestigkeit einer solchen Pumpe bei gegebenem Gesamt-Notlagerluftspalt umso höher ist, je genauer der Rotor in seiner Sollposition nämlich in der geometrischen Mitte des Notlagers positioniert ist.

Der große Vorteil der Erfindung liegt darin, daß zur Ermittlung des Zentrums und zum Zentrieren des Rotors in diese Position keine zusätzlichen Bauelemente notwendig sind. Die ohnehin vorhandenen Bauelemente wie Sensoren und Regler für das Magnetlager werden für die Einstellung verwendet. Eine zusätzliche, über die bei dieser Technik hinausgehende, hochgenaue mechanische Bearbeitung und/oder aufwendige Sensortechnik wie z.B. linearisierte Sensoren sind nicht notwendig.

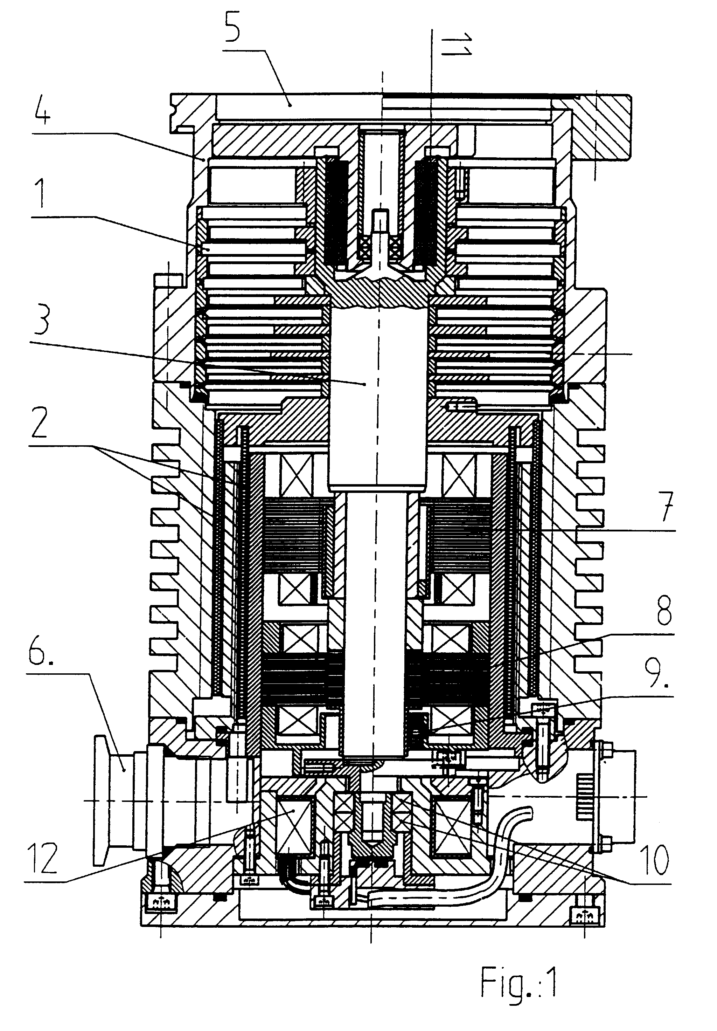

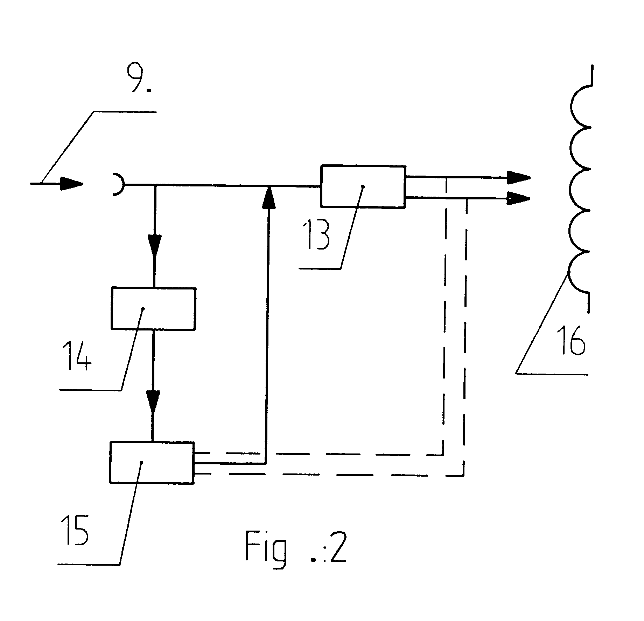

Anhand der Abbildungen 1 und 2 soll die Erfindung an einem Beispiel näher erläutert werden.

Abb. 1 zeigt die schematische Darstellung einer Reibungspumpe mit Turbomolekularpumpstufe, Holweckstufe und Magnetlager.

Abb. 2 zeigt ein Schema der Magnetlagerregelung.

Die Reibungspumpe in Abb. 1 besteht aus einer Turbomolekularpumpe 1 als Hochvakuumpumpstufe und einer Molekularpumpe 2 nach der Bauart von Holweck als Pumpstufe für den höheren Druckbereich. Beide Pumpstufen sind in einem gemeinsamen Gehäuse 4 mit Ansaugflansch 5 und Vorvakuumanschluß 6 untergebracht. Der Antrieb des gemeinsamen Rotors 3 ist mit 7 bezeichnet. Ein aktiv geregeltes magnetisches Radiallager 8 ist im vorliegenden Beispiel unterhalb der Antriebseinrichtung 7 angebracht, 9 bezeichnet einen radialen Positionssensor. Ein weiterer befindet sich um 90 ° versetzt und ist in dieser Darstellung nicht zu sehen. Ein mechanisches Notlager ist mit 10 bezeichnet. Im hier gezeigten Beispiel sei noch erwähnt, daß der obere Teil des Rotors mit einem passiven radialen Permanentmagnetlager 11 versehen ist und die axiale Lage durch ein aktives Axiallager 12 am unteren Ende des Rotors stabilisiert wird.

Abb. 2 gibt einen Überblick über die Regeleinrichtung. Das vom Sensor 9 kommende Signal wird im Regler 13 so verarbeitet, daß das geometrische Zentrum erkannt wird. Der Regler 13 gibt dann ein Stellsignal an die Spulen 16 des Magnetlagers weiter, welches den Rotor in der Mitte zentriert.

## Patentansprüche

1. Verfahren zum Betrieb einer Reibungspumpe mit einer oder mehreren Pumpstufen (1, 2) zur Förderung von Gasen, wobei die Lagerung des Rotors (3) durch Magnetlager mit mindestens einem aktiv geregelten Radiallager (8) erfolgt und die radiale Lage des Rotors (3) in Bezug auf das Gehäuse (4) oder die Statoreinrichtungen durch Positionssensoren (9) erfaßt wird und mindestens ein mechanisches Notlager (10) vorhanden ist, dadurch gekennzeichnet, daß die ohnehin vorhandenen Bauelemente, nämlich das magnetische Radiallager (8), die Positionssensoren (9) und die Regeleinrichtung (13) für das Magnetlager in einer solchen Art zusammenwirken, daß das geometrische Zentrum des Rotors im Notlager (10) ermittelt werden kann und der Rotor (3) in dieser Lage zentriert wird.

2. Verfahren zum Betrieb einer Reibungspumpe nach Anspruch 1, dadurch gekennzeichnet, daß die Regeleinrichtung (13) das aktiv geregelte Radiallager (8) so ansteuert, daß der Rotor (3) nacheinander in zwei zueinander senkrechten Richtungen gegen das Notlager (10) gezogen wird, und daß die Regeleinrichtung (13) mittels der radialen Positionssensoren (9) diese Position mißt und daraus die geometrische Mitte des Notlagers ermittelt und diese für die magnetische Lagerung als Sollposition verwendet.

## Claims

1. Method of operating a friction pump having one or more pumping stages (1, 2) for delivering gases, wherein the bearing arrangement of the rotor (3) is effected by means of magnet bearings having at least one actively controlled radial bearing (8) and the radial position of the rotor (3) in relation to the housing (4) or to the stator devices is detected by position sensors (9) and at least one mechanical emergency bearing (10) is provided, characterized in that the components which are in any case provided, namely the magnetic radial bearing (8), the position sensors (9) and the control device (13) for the magnet bearing, cooperate in such a way that the geometric centre of the rotor in the emergency bearing (10) may be determined and the rotor (3) is centred in said position.

2. Method of operating a friction pump according to claim 1, characterized in that the control device (13) drives the actively controlled radial bearing (8) in such a way that the rotor (3) is drawn successively in two directions perpendicular to one another towards the emergency bearing (10), and that the control device (13) measures said position by means of the radial position sensors (9) and on said basis determines the geometric centre of the emergency bearing and utilizes said geometric centre as a setpoint position for the magnetic bearing arrangement.

## Revendications

1. Procédé d'exploitation d'une pompe à vide à friction à un ou plusieurs étages (1, 2) de pompe, pour mettre des gaz en circulation, dans lequel le logement du rotor (3) est réalisé au moyen de paliers magnétiques qui incluent au moins un palier radial (8) à régulation active et la position radiale du rotor (3) par rapport au carter (4) ou aux dispositifs de stator est détectée par des capteurs (9) de position et au moins un palier de secours mécanique (10) est prévu, caractérisé en ce que les composants présents de toute façon, c'est-à-dire le palier radial magnétique (8), les capteurs (9) de position et le dispositif de régulation (13) du palier magnétique coopèrent d'une façon telle que le centre géométrique du rotor dans le palier de sécurité (10) peut être déterminé et le rotor (3) est centré dans cette position.

2. Dispositif d'exploitation d'une pompe à vide à friction selon la revendication 1, caractérisé en ce que le dispositif de régulation (13) du palier radial (8) à régulation active est commandé d'une manière telle que le rotor (3) est tiré contre le palier de secours (10) successivement dans deux directions perpendiculaires entre elles et en ce que le dispositif de régulation (13) mesure cette position au moyen des capteurs radiaux (9) de position et détermine à partir de là le milieu géométrique du palier de sécurité et utilise ce milieu comme position de consigne pour le logement magnétique.
